# EUROPEAN PATENT SPECIFICATION

(11) **EP 2 880 919 B1**
(45) Date of publication and mention of the grant of the patent: **30.08.2017**
(21) Application number: 13825228.3
(22) Date of filing: 30.07.2013
(51) Int. Cl.: H04W 48/08, H04W 36/00

(54) **METHOD AND APPARATUS FOR RECEIVING SYSTEM INFORMATION IN WIRELESS COMMUNICATION SYSTEM**
VERFAHREN UND VORRICHTUNG ZUM EMPFANGEN VON SYSTEMINFORMATIONEN IN EINEM DRAHTLOSEN KOMMUNIKATIONSSYSTEM
PROCÉDÉ ET APPAREIL DE RÉCEPTION D'INFORMATIONS DE SYSTÈME DANS UN SYSTÈME DE COMMUNICATIONS SANS FIL

(30) Priority: 30.07.2012 US 201261677440 P
(43) Date of publication of application: 10.06.2015
(73) Proprietor: LG Electronics Inc., Yeongdeungpo-gu Seoul 150-721 (KR)
(72) Inventor: LEE, Youngdae, Seoul 137-130 (KR); PARK, Sungjun, Seoul 137-130 (KR); YI, Seungjune, Seoul 137-130 (KR); JUNG, Sunghoon, Seoul 137-130 (KR)
(74) Representative: Frenkel, Matthias Alexander
(86) International application number: PCT/KR2013/006841
(87) International publication number: WO 2014/021610

(56) References cited:
- KR-A- 20120 049 156
- US-A1- 2010 197 277
- US-A1- 2012 002 643
- US-A1- 2012 113 812
- HUAWEI: "Optimization of System Information reading time", 3GPP DRAFT; R2-062241 OPTIMIZATION OF SYSTEM INFORMATION READING TIME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Tallinn, Estonia; 20060828 - 20060901, 23 August 2006 (2006-08-23), XP050602776, [retrieved on 2006-08-23]
- NEC ET AL: "Efficiency of On-Demand System Information Broadcast", 3GPP DRAFT; R2-070074, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133190, [retrieved on 2007-01-12]
- SAMSUNG: "Introduction of Extended Access Barring", 3GPP DRAFT; 36331_CRXXXX_(REL-11)_R2-122608 ON EAB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 15 May 2012 (2012-05-15), XP050607125, [retrieved on 2012-05-15]
- ERICSSON ET AL.: 'Way forward with EAB SIB update for LTE' 3GPP TSG-RAN WG2 #77BIS, TDOC R2-121661 26 March 2012, JEJU, SOUTHKOREA, XP050606393
- LG ELECTRONICS INC.: 'UE behaviours after UE is barred due to EAB' 3GPP TSG-RAN WG2 #77BIS, R2-121387 26 March 2012, JEJU, SOUTH KOREA, XP050606291

## Description

### Technical Field

The present invention relates to wireless communications, and more particularly, to a method and apparatus for receiving system information in a wireless communication system.

### Background Art

Universal mobile telecommunications system (UMTS) is a 3rd generation (3G) asynchronous mobile communication system operating in wideband code division multiple access (WCDMA) based on European systems, global system for mobile communications (GSM) and general packet radio services (GPRS). A long-term evolution (LTE) of UMTS is under discussion by the 3rd generation partnership project (3GPP) that standardized UMTS.

Inter-cell interference coordination (ICIC) has the task to manage radio resources such that inter-cell interference is kept under control. ICIC mechanism includes a frequency domain component and time domain component. ICIC is inherently a multi-cell radio resource management (RRM) function that needs to take into account information (e.g. the resource usage status and traffic load situation) from multiple cells. The preferred ICIC method may be different in the uplink and downlink.

The frequency domain ICIC manages radio resource, notably the radio resource blocks, such that multiple cells coordinate use of frequency domain resources.

For the time domain ICIC, subframe utilization across different cells are coordinated in time through backhaul signaling or operation, administration, and maintenance (OAM) configuration of so called almost blank subframe (ABS) patterns. The ABSs in an aggressor cell are used to protect resources in subframes in the victim cell receiving strong inter-cell interference. ABSs are subframes with reduced transmit power (including no transmission) on some physical channels and/or reduced activity. The eNB ensures backwards compatibility towards UEs by transmitting necessary control channels and physical signals as well as system information. Patterns based on ABSs are signaled to the UE to restrict the UE measurement to specific subframes, called measurement resource restrictions. There are different patterns depending on the type of measured cell (serving or neighbor cell) and measurement type (e.g. RRM, radio link monitoring (RLM)). Multicast-broadcast single frequency network (MBSFN) subframes can be used for time domain ICIC when they are also included in ABS patterns. The eNB cannot configure MBSFN subframes as ABSs when these MBSFN subframes are used for other usages (e.g., multimedia broadcast multicast service (MBMS), location service (LCS)).

ICIC is located in the eNB.

When ICIC is configured, it may be required that a method for receiving system information and/or a paging message.

HUAWEI: "Optimization of System Information reading time," 3GPP DRAFT; R2-062241 OPTIMIZATION OF SYSTEM INFORMATION READING TIME, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol RAN WG2, no. Tallinn, Estonia; 20060828-20060901, 23 August 2006 (2006-08-23), XP050602776 discloses a method to optimize system information reading time comprises features that a UE transmits an implemented SIB list; and UTRAN responses back by sending the missing SIB.

US 2012/002643 A1 discloses a method for enabling a user equipment to perform a handover in a wireless communication system which supports carrier aggregation.

US 2010/197277 A1 discloses a method for supporting a closed subscriber group (CSG) service.

NEC ET AL: "Efficiency of On-Demand System Information Broadcast," 3GPP DRAFT; R2-070074, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Sorrento, Italy; 20070112, 12 January 2007 (2007-01-12), XP050133190 discloses a method to increase efficiency of on-demand mechanism by estimating the number of SIB group requests.

SAMSUNG: "Introduction of Extended Access Barring," 3GPP DRAFT; 36331_CRXXXX_(REL-11)_R2-122608 ON EAB, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Prague, Czech Republic; 20120521-20120525, 15 May 2012 (2012-05-15), XP050607125 discloses that extended access barring is to be introduced.

### Summary of Invention

### Technical Problem

The present invention provides a method for receiving system information in a wireless communication system. The present invention also provides a method for receiving system information based on user equipment (UE) capability when inter-cell interference coordination (ICIC) is configured. The present invention also provides a method for transmitting information on resource when ICIC is configured.

### Solution to Problem

In an aspect, a method for receiving, by a user equipment (UE), system information in a wireless communication system is provided. The method includes receiving, by the UE, a request for transmission of information indicating a support of a reception of the system information,wherein the request for transmission of the information indicating the support of the reception of the system information is received via a radio resource control, RRC, connection reconfiguration message;transmitting, by the UE, the information indicating support of the reception of the system information to a source eNB, wherein the information indicating the support of the reception of the system information indicates which type of the system information the UE supports,wherein the UE supported type of the system information is related to one or more system information block, SIB, numbers other than SIB 1 to SIB 7, wherein the information indicating the support of the reception of the system information further includes indicating support of a public warning system, PWS, capability or an extended access barring, EAB, capability; and receiving, by the UE, the system information based on the information indicating the support of the reception of the system information.

In another aspect, a user equipment, UE, for implementing the method claimed in claim 1 is provided.

### Advantageous Effects of Invention

Scheduling of system information and/or a paging message may be performed efficiently.

### Brief Description of Drawings

FIG. 1 shows a structure of a wireless communication system.
FIG. 2 is a diagram showing radio interface protocol architecture for a control plane.
FIG. 3 is a diagram showing radio interface protocol architecture for a user plane.
FIG. 4 shows an example of a physical channel structure.
FIG. 5 shows transmission of a paging channel.
FIG. 6 shows an RRC connection establishment procedure.
FIG. 7 shows an RRC connection reconfiguration procedure.
FIG. 8 shows a UE capability transfer procedure.
FIG. 9 shows an example of a CSG scenario of a time domain ICIC deployment scenario.
FIG. 10 shows an example of a pico scenario of a time domain ICIC deployment scenario.
FIG. 11 shows a load indication procedure.
FIG. 12 shows an example of a method for transmitting information on resources according to an embodiment of the present invention.
FIG. 13 shows an example of a method for receiving system information according to an embodiment of the present invention.
FIG. 14 shows another example of a method for receiving system information according to an embodiment of the present invention.
FIG. 15 is a block diagram showing wireless communication system to implement an embodiment of the present invention.

### Mode for the Invention

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802.20, evolved UTRA (E-UTRA), etc. IEEE 802.16m is evolved from IEEE 802.16e, and provides backward compatibility with a system based on the IEEE 802.16e. The UTRA is a part of a universal mobile telecommunication system (UMTS). 3^{rd} generation partnership project (3GPP) long term evolution (LTE) is a part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

For clarity, the following description will focus on LTE-A. However, technical features of the present invention are not limited thereto.

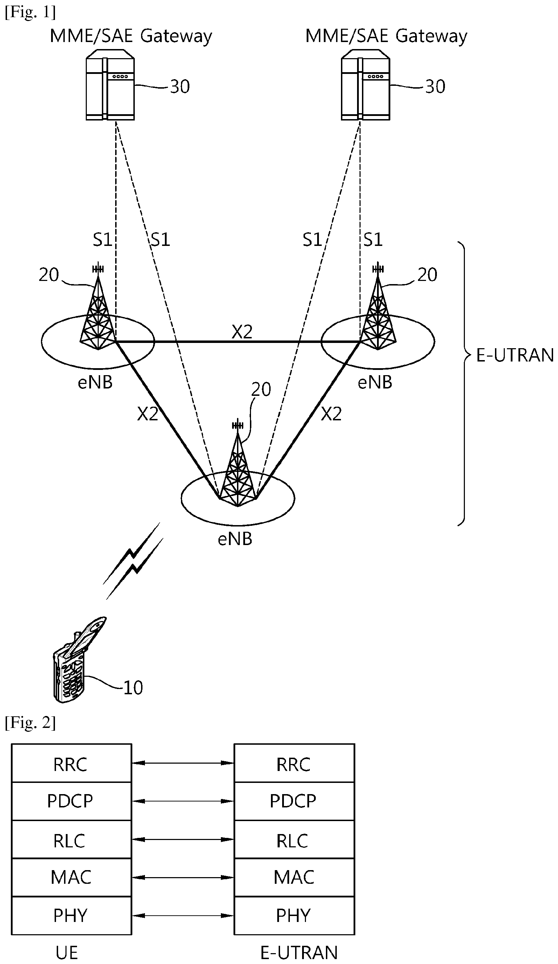

FIG. 1 shows a structure of a wireless communication system.

The structure of FIG. 1 is an example of a network structure of an evolved-UMTS terrestrial radio access network (E-UTRAN). An E-UTRAN system may be a 3GPP LTE/LTE-A system. An evolved-UMTS terrestrial radio access network (E-UTRAN) includes a user equipment (UE) 10 and a base station (BS) 20 which provides a control plane and a user plane to the UE. The user equipment (UE) 10 may be fixed or mobile, and may be referred to as another terminology, such as a mobile station (MS), a user terminal (UT), a subscriber station (SS), a wireless device, etc. The BS 20 is generally a fixed station that communicates with the UE 10 and may be referred to as another terminology, such as an evolved node-B (eNB), a base transceiver system (BTS), an access point, etc. There are one or more cells within the coverage of the BS 20. A single cell is configured to have one of bandwidths selected from 1.25, 2.5, 5, 10, and 20 MHz, etc., and provides downlink or uplink transmission services to several UEs. In this case, different cells can be configured to provide different bandwidths.

Interfaces for transmitting user traffic or control traffic may be used between the BSs 20. The BSs 20 are interconnected by means of an X2 interface. The BSs 20 are connected to an evolved packet core (EPC) by means of an S1 interface. The EPC may consist of a mobility management entity (MME) 30, a serving gateway (S-GW), and a packet data network (PDN) gateway (PDN-GW). The MME has UE access information or UE capability information, and such information may be primarily used in UE mobility management. The S-GW is a gateway of which an endpoint is an E-UTRAN. The PDN-GW is a gateway of which an endpoint is a PDN. The BSs 20 are connected to the MME 30 by means of an S1-MME, and are connected to the S-GW by means of S1-U. The S1 interface supports a many-to-many relation between the BS 20 and the MME/S-GW 30.

Hereinafter, a downlink (DL) denotes communication from the BS 20 to the UE 10, and an uplink (UL) denotes communication from the UE 10 to the BS 20. In the DL, a transmitter may be a part of the BS 20, and a receiver may be a part of the UE 10. In the UL, the transmitter may be a part of the UE 10, and the receiver may be a part of the BS 20.

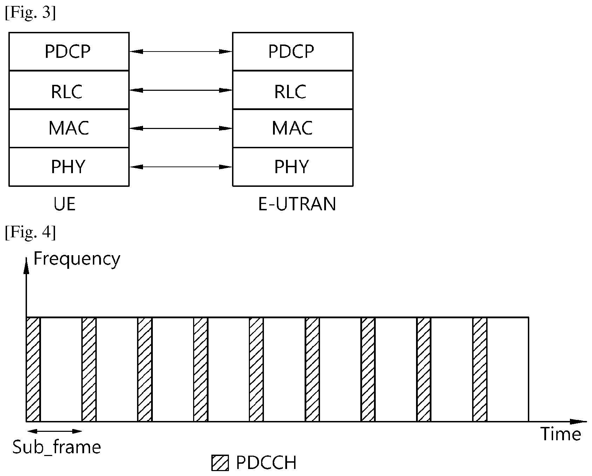

FIG. 2 is a diagram showing radio interface protocol architecture for a control plane. FIG. 3 is a diagram showing radio interface protocol architecture for a user plane.

Layers of a radio interface protocol between the UE and the E-UTRAN can be classified into a first layer (L1), a second layer (L2), and a third layer (L3) based on the lower three layers of the open system interconnection (OSI) model that is well-known in the communication system. The radio interface protocol between the UE and the E-UTRAN can be horizontally divided into a physical layer, a data link layer, and a network layer, and can be vertically divided into a control plane which is a protocol stack for control signal transmission and a user plane which is a protocol stack for data information transmission. The layers of the radio interface protocol exist in pairs at the UE and the E-UTRAN.

A physical (PHY) layer belonging to the L1 provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transmitted through a radio interface. Between different PHY layers, i.e., a PHY layer of a transmitter and a PHY layer of a receiver, data is transferred through the physical channel. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH can carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ ACK/NACK signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

FIG. 4 shows an example of a physical channel structure.

A physical channel consists of a plurality of subframes in a time domain and a plurality of subcarriers in a frequency domain. One subframe consists of a plurality of symbols in the time domain. One subframe consists of a plurality of resource blocks (RBs). One RB consists of a plurality of symbols and a plurality of subcarriers. In addition, each subframe can use specific subcarriers of specific symbols of a corresponding subframe for a PDCCH. For example, a first symbol of the subframe can be used for the PDCCH. A transmission time interval (TTI) which is a unit time for data transmission may be equal to a length of one subframe.

A DL transport channel for transmitting data from the network to the UE includes a broadcast channel (BCH) for transmitting system information, a paging channel (PCH) for transmitting a paging message, a DL-SCH for transmitting user traffic or control signals, etc. The system information carries one or more system information blocks. All system information blocks can be transmitted with the same periodicity. Traffic or control signals of a multimedia broadcast/multicast service (MBMS) are transmitted through a multicast channel (MCH). Meanwhile, a UL transport channel for transmitting data from the UE to the network includes a random access channel (RACH) for transmitting an initial control message, a UL-SCH for transmitting user traffic or control signals, etc.

A MAC layer belonging to the L2 provides a service to a higher layer, i.e., a radio link control (RLC), through a logical channel. A function of the MAC layer includes mapping between the logical channel and the transport channel and multiplexing/ de-multiplexing for a transport block provided to a physical channel on a transport channel of a MAC service data unit (SDU) belonging to the logical channel. The logical channel is located above the transport channel, and is mapped to the transport channel. The logical channel can be divided into a control channel for delivering control region information and a traffic channel for delivering user region information. The logical includes a broadcast control channel (BCCH), a paging control channel (PCCH), a common control channel (CCCH), a multicast control channel (MCCH), a multicast traffic channel (MTCH), etc.

An RLC layer belonging to the L2 supports reliable data transmission. A function of the RLC layer includes RLC SDU concatenation, segmentation, and reassembly. To ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides error correction by using an automatic repeat request (ARQ). Meanwhile, a function of the RLC layer can be implemented with a functional block inside the MAC layer. In this case, the RLC layer may not exist.

A packet data convergence protocol (PDCP) layer belongs to the L2. A function of a packet data convergence protocol (PDCP) layer in the user plane includes user data delivery, header compression, and ciphering. The header compression has a function for decreasing a size of an IP packet header which contains relatively large-sized and unnecessary control information, to support effective transmission in a radio section having a narrow bandwidth. A function of a PDCP layer in the control plane includes control-plane data delivery and ciphering/integrity protection.

A radio resource control (RRC) layer belonging to the L3 is defined only in the control plane. The RRC layer takes a role of controlling a radio resource between the UE and the network. For this, the UE and the network exchange an RRC message through the RRC layer. The RRC layer serves to control the logical channel, the transport channel, and the physical channel in association with configuration, reconfiguration, and release of RBs. An RB is a logical path provided by the L2 for data delivery between the UE and the network. The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

A radio resource state (RRC) state indicates whether an RRC of a user equipment (UE) is logically connected to an RRC of a network. When an RRC connection is established between an RRC layer of the UE and an RRC layer of the network, the UE is in an RRC connected state (RRC_CONNECTED), and otherwise the UE is in an RRC idle state (RRC_IDLE). Since the UE in the RRC_CONNECTED has the RRC connection established with the network, the network can recognize the existence of the UE in the RRC_CONNECTED and can effectively control the UE. Meanwhile, the UE in the RRC_IDLE cannot be recognized by the network, and a core network (CN) manages the UE in unit of a tracking area (TA) which is a larger area than a cell. That is, only the existence of the UE in the RRC_IDLE is recognized in unit of a large area, and the UE must transition to the RRC_CONNECTED to receive a typical mobile communication service such as voice or data communication.

When the user initially powers on the UE, the UE first searches for a proper cell and then remains in the RRC_IDLE in the cell. When there is a need to establish an RRC connection, the UE which remains in the RRC_IDLE may establish the RRC connection with the RRC of the network through an RRC connection procedure and then may transition to the RRC_CONNECTED. The UE which remains in the RRC_IDLE may need to establish the RRC connection with the network when uplink data transmission is necessary due to a user's call attempt or the like or when there is a need to transmit a response message upon receiving a paging message from the network.

A non-access stratum (NAS) layer belongs to an upper layer of the RRC layer and serves to perform session management, mobility management, or the like. To manage mobility of the UE in the NAS layer, two states, i.e., an EPS mobility management (EMM)-REGISTERED state and an EMM-DEREGISTERED state, can be defined. The two states are applicable to the UE and the MME. The UE is initially in the EMM-DEREGISTERED. To access the network, the UE may perform a process of registering to the network through an initial attach procedure. If the initial attach procedure is successfully performed, the UE and the MME may be in the EMM-REGISTERED.

In addition, to manage a signaling connection between the UE and the EPC, two states, i.e., an EPS connection management (ECM)-IDLE state and an ECM-CONNECTED state, can be defined. The two states are applicable to the UE and the MME. When the UE in the ECM-IDLE establishes an RRC connection with the E-UTRAN, the UE may be in the ECM-CONNECTED. When the MME in the ECM-IDLE establishes an S1 connection with the E-UTRAN, the MME may be in the ECM-CONNECTED. When the UE is in the ECM-IDLE, the E-UTRAN does not have information on the context of the UE. Therefore, the UE in the ECM-IDLE can perform a UE-based mobility related procedure such as cell selection or cell reselection without having to receive a command of the network. If a location of the UE in the ECM-IDLE becomes different from a location known to the network, the UE may report the location of the UE to the network through a tracking area update procedure. On the other hand, the mobility of the UE in the ECM-CONNECTED may be managed by the command of the network.

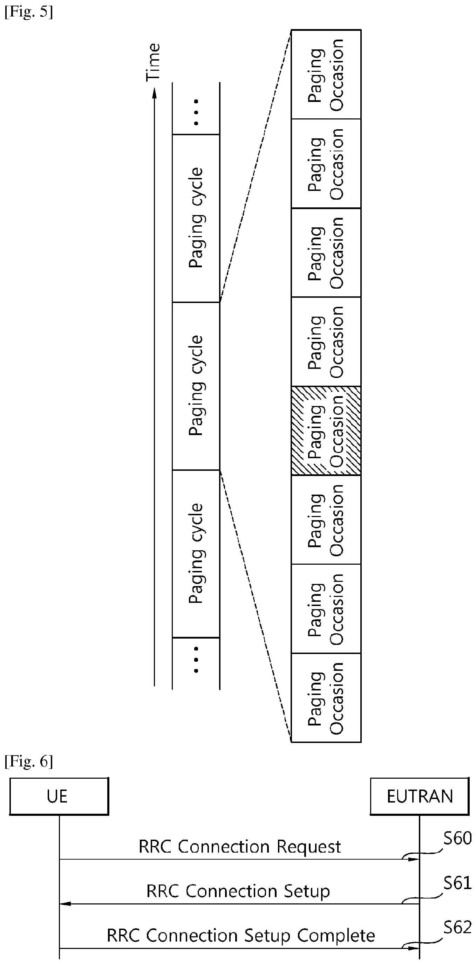

FIG. 5 shows transmission of a paging channel.

When there is data to be transmitted by a network to a specific UE or a call delivered to the specific UE, the paging message is used to search and wake up the UE. To transmit the paging message, an E-UTRAN may search for a certain location area in which the UE is currently located, and may transmit the paging message through one cell belonging to the location area in which the UE is located. For this, whenever there is a change in the location area, the UE may report the change to the network, which is called a location area update procedure.

Referring to FIG. 5, a plurality of paging cycles is configured, and one paging cycle may include a plurality of paging occasions. When receiving the paging message, the UE may perform discontinuous reception (DRX) to decrease power consumption. For this, the network may configure a plurality of paging occasions for every time period called a paging cycle, and a specific UE may receive the paging message by monitoring a paging channel only during a specific paging occasion. The UE does not monitor the paging channel in a time other than the specific paging occasion assigned to the UE. One paging occasion may correspond to one TTI.

The system information is necessary information which must be known to the UE to access the network. The UE must entirely receive the system information before the network access, and must always have the latest system information. In addition, since the system information is information which must be known to all UEs in one cell, the BS may periodically transmit the system information.

The system information may include a master information block (MIB), a scheduling block (SB), a system information block (SIB), etc. The MIB may indicate a physical configuration (e.g., a bandwidth, etc.) of a corresponding cell. The SB may indicate transmission information of SIBs, for example, a transmission period of the SIBs. The SIB is a set of related system information. For example, a certain SIB may include only information of a neighbor cell, and another SIB may include only information of an uplink radio channel used by the UE.

The BS may transmit the paging message to the UE to report whether there is a change in the system information. In this case, the paging message may include a system information change indicator. If the paging message received according to the paging cycle includes the system information change indicator, the UE may receive the system information transmitted through a BCCH which is a logical channel.

FIG. 6 shows an RRC connection establishment procedure. It may be referred to Section 5.3.3 of 3GPP TS 36.331 V10.5.0 (2012-03). The purpose of this procedure is to establish an RRC connection. The RRC connection establishment may involve SRB 1 establishment. The RRC connection establishment procedure is also used to transfer the initial NAS dedicated rmation/ message from the UE to the E-UTRAN. The E-UTRAN may apply the RRC connection establishment procedure to establish SRB1 only.

Referring to FIG. 6, at step S60, the UE transmits an RRC connection request (*RRC-ConnectionRequest*) message to the E-UTRAN. At step S61, the E-UTRAN transmits an RRC connection setup (*RRCConnectionSetup*) message to the UE. At step S62, the UE transmits an RRC connection setup complete (*RRCConnectionSetupComplete*) message to the E-UTRAN.

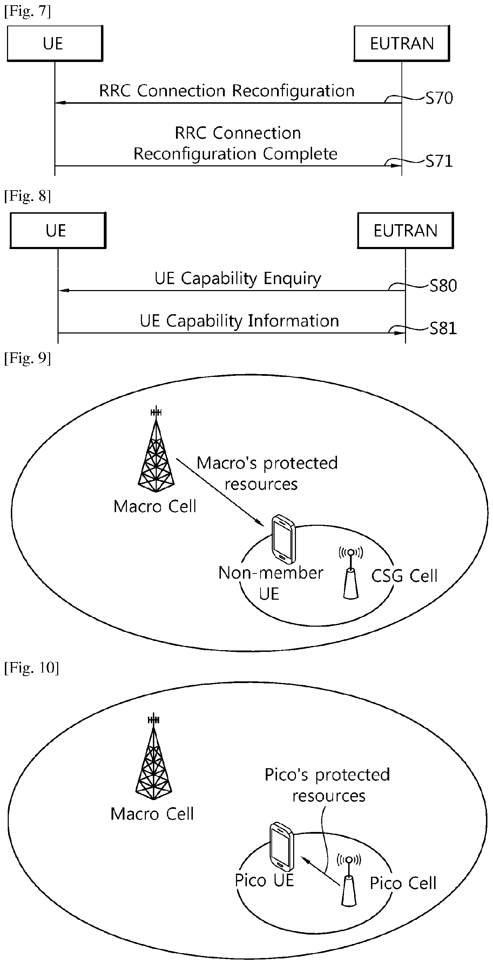

FIG. 7 shows an RRC connection reconfiguration procedure. It may be referred to Section 5.3.5 of 3GPP TS 36.331 V10.5.0 (2012-03). The purpose of this procedure is to modify an RRC connection, e.g. to establish/modify/release RBs, to perform handover, to setup/modify/release measurements, to add/modify/release secondary cells (SCells). As part of the RRC connection reconfiguration procedure, NAS dedicated rmation may be transferred from the E-UTRAN to the UE.

Referring to FIG. 7, at step S70, the E-UTRAN transmits an RRC connection reconfiguration (*RRCConnectionReconfiguration*) message to the UE. At step S71, the UE transmits an RRC connection reconfiguration complete (*RRCConnectionReconfigura-tionComplete*) message to the E-UTRAN.

FIG. 8 shows a UE capability transfer procedure. It may be referred to Section 5.6.3 of 3GPP TS 36.331 V10.5.0 (2012-03). The purpose of this procedure is to transfer UE radio access capability information from the UE to the E-UTRAN. If the UE has changed its E-UTRAN radio access capabilities, the UE shall request higher layers to initiate the necessary NAS procedures that would result in the update of UE radio access capabilities using a new RRC connection.

Referring to FIG. 8, at step S80, the E-UTRAN transmits a UE capability enquiry ( *UECapabilityEnquiry*) message to the UE. At step S81, the UE transmits a UE capability information (*UECapabilityInformation*) message to the E-UTRAN.

Inter-cell interference coordination (ICIC) is described below. It may be referred to Section 16.1.5 of 3GPP TS 36.300 V11.2.0 (2012-06).

For the UE to measure "protected" resources of the serving cell and/or neighbor cells, radio resource management (RRM)/radio link monitoring (RLM)/channel state information (CSI) measurement resource restriction is signaled to the UE. There are three kinds of measurement resource restriction patterns that may be configured for the UE.
- Pattern 1: A single RRM/RLM measurement resource restriction for the primary cell (PCell).
- Pattern 2: A single RRM measurement resource restriction for all or indicated list of neighbor cells operating in the same carrier frequency as the PCell.
- Pattern 3: Resource restriction for CSI measurement of the PCell. If configured, two subframe subsets are configured per UE. The UE reports CSI for each configured subframe subset.

For pattern 3, it is up to the network to choose the two subframe subsets but typically the two subframe subsets are chosen with the expectation that CSI measurements using the two configured subframe subsets are subject to different levels of interference (e.g., one subframe subset indicates almost blank subframes (ABSs) while the second subframe subset indicates non-ABSs).

In RRC_CONNECTED, the RRM/RLM/CSI measurement resource restrictions are configured by dedicated RRC signaling.

operation, administration, and maintenance (OAM) requirements for time domain ICIC is configured as followings:

### 1) Configuration for closed subscriber group (CSG) cell

When the time-domain ICIC is used for non-members UE in close proximity of a CSG cell, OAM configures a CSG cell not to use a time domain resource set (i.e. a set of subframes), so that a non-member UE in close proximity of the CSG cell can be still served by another cell. OAM also configures a cell neighbor to a CSG cell with the protected time domain resource set not used by the CSG cell, so that the neighbor cell knows which time domain resource can be used for a non-member UE in close proximity of the CSG cell.

### 2) Configuration for interfering non-CSG cell

When the time-domain ICIC is used to mitigate interference between two cells using X2 signaling of ABS patterns from an interfering eNB to an interfered eNB, the following OAM requirements are applied.
- OAM may configure association between eNBs to use the time-domain ICIC.
- For the deployment scenarios where common subset for ABS patterns from multiple interfering cells is desirable, OAM configuration ensures that a 'common subset' exists between the ABS patterns of those interfering cells.

Time domain ICIC deployment scenarios are described. Two scenarios have been identified where conventional ICIC techniques are insufficient to overcome co-channel interference, the CSG scenario and the pico scenario. The identified scenarios are examples of network configurations that are intended to depict the basic concept of time domain ICIC and it should be understood that other network deployment scenarios are also possible.

FIG. 9 shows an example of a CSG scenario of a time domain ICIC deployment scenario.

Dominant interference condition may happen when non-member users are in close proximity of a CSG cell. Depending on network deployment and strategy, it may not be possible to divert the users suffering from inter-cell interference to another E-UTRA carrier or other radio access technology (RAT). Time domain ICIC may be used to allow such non-member UEs to remain served by the macro cell on the same frequency layer.

Such interference may be mitigated by the CSG cell utilizing ABSs to protect the corresponding macro cell's subframes from the interference. A non-member UE may be signaled to utilize the protected resources for RRM, RLM and CSI measurements for the serving macro cell, allowing the UE to continue to be served by the macro cell under strong interference from the CSG cell.

In RRC_CONNECTED, the network can find out that the UE is subject to dominant interference from a CSG cell which the UE is not a member of through the existing measurement events, at which point the network may choose to configure the RRM/ RLM/CSI measurement resource restriction for the UE. The network may also configure RRM measurement resource restriction for neighbor cells in order to facilitate mobility from the serving macro cell. The network may release the RRM/ RLM/CSI measurement resource restriction when it detects that the UE is no longer severely interfered by the CSG cell.

FIG. 10 shows an example of a pico scenario of a time domain ICIC deployment scenario.

Time domain ICIC may be utilized for pico users who served in the edge of the serving pico cell, e.g. for traffic off-loading from a macro cell to a pico cell. Time domain ICIC may be utilized to allow such UEs to remain served by the pico cell on the same frequency layer.

Such interference may be mitigated by the macro cell(s) utilizing ABSs to protect the corresponding pico cell's subframes from the interference. A UE served by a pico cell uses the protected resources for RRM, RLM and CSI measurements for the serving pico cell.

For a UE served by a pico cell, the RRM/RLM/CSI measurement resource restriction may allow more accurate measurement of pico cell under strong interference from the macro cell(s). The pico cell may selectively configure the RRM/RLM/CSI measurement resource restriction only for those UEs subject to strong interference from the macro cell(s). Also, for a UE served by a macro cell, the network may configure RRM measurement resource restriction for neighbor cells in order to facilitate mobility from the macro cell to a pico cell.

Load indication procedure is described. It may be referred to Section 8.3.1 of 3GPP TS 36.423 V10.3.0 (2011-09).

The purpose of the load indication procedure is to transfer load and interference co-ordination information between eNBs controlling intra-frequency neighbor cells.

The procedure uses non UE-associated signaling.

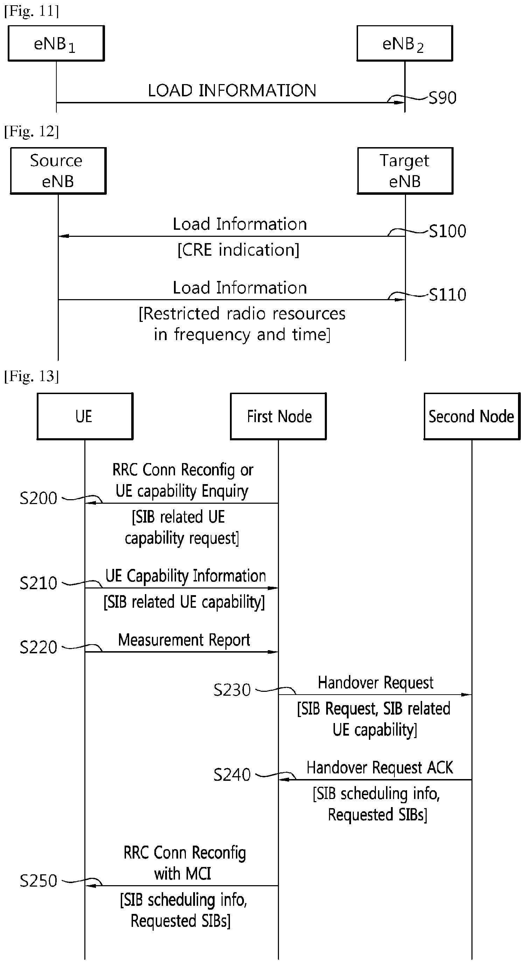

FIG. 11 shows a load indication procedure. At step S90, an eNB 1 transmits a load information message to an eNB2.

An eNB initiates the procedure by sending the load information message to eNBs controlling intra-frequency neighbor cells.

If the UL interference overload indication IE is received in the load information message, it indicates the interference level experienced by the indicated cell on all resource blocks, per physical resource block (PRB). The receiving eNB may take such information into account when setting its scheduling policy and shall consider the received UL interference overload indication IE value valid until reception of a new load information message carrying an update of the same IE.

If the UL high interference indication IE is received in the load information message, it indicates, per PRB, the occurrence of high interference sensitivity, as seen from the sending eNB. The receiving eNB should try to avoid scheduling cell edge UEs in its cells for the concerned PRBs. The target cell ID IE received within the UL high interference information IE group in the load information message indicates the cell for which the corresponding UL high interference indication IE is meant. The receiving eNB shall consider the value of the UL high interference information IE group valid until reception of a new load information message carrying an update.

If the relative narrowband Tx power (RNTP) IE is received in the load information message, it indicates, per PRB, whether downlink transmission power is lower than the value indicated by the RNTP threshold IE. The receiving eNB may take such information into account when setting its scheduling policy and shall consider the received relative narrowband Tx power (RNTP) IE value valid until reception of a new load information message carrying an update.

If the ABS information IE is included in the load information message, the ABS pattern info IE indicates the subframes designated as ABSs by the sending eNB for the purpose of interference coordination. The receiving eNB may take such information into consideration when scheduling UEs.

The receiving eNB may use the measurement subset IE received in the load information message, for the configuration of specific measurements towards the UE.

The receiving eNB shall consider the received information as immediately applicable. The receiving eNB shall consider the value of the ABS information IE valid until reception of a new load information message carrying an update.

If an ABS indicated in the ABS pattern info IE coincides with a multicast-broadcast single frequency network (MBSFN) subframe, the receiving eNB shall consider that the subframe is designated as ABS by the sending eNB.

If the invoke indication IE is included in the load information message, it indicates which type of information the sending eNB would like the receiving eNB to send back. The receiving eNB may take such request into account.

If the invoke indication IE is set to "ABS Information", it indicates the sending eNB would like the receiving eNB to initiate the load indication procedure, with the load information message containing the ABS information IE indicating non-zero ABS patterns in the relevant cells.

The load information message is sent by an eNB to neighbor eNBs to transfer load and interference co-ordination information. Table 1 and Table 2 show a load information message.

**[Table 1]**

| **IE/Group Name** | **Presence** | **Range** | **IE type and reference** | **Semantics description** | **Critica lity** | **Assigned Criticality** |
|---|---|---|---|---|---|---|
| Message Type | M | | | | YES | ignore |
| Cell Information | M | | | | YES | ignore |
| **>Cell Information Item** | | *1* .. *<maxC ellineN B>* | | | EACH | ignore |
| >>Cell ID | M | | ECGI | Id of the source cell | - | - |
| >>UL Interference Overload Indication | O | | | | - | - |
| **>>UL High Interference Information** | | *0*.. *<maxC ellineN B>* | | | - | - |
| >>>Target Cell ID | M | | ECGI | Id of the cell for which the HII is meant | - | - |
| >>>UL High Interference Indication | M | | | | - | - |
| >>Relative Narrowband Tx Power (RNTP) | O | | | | - | - |
| >>BS Information | O | | 9.2.54 | | YES | ignore |
| >>Invoke Indication | O | | 9.2.55 | | YES | ignore |

**[Table 2]**

| **Range bound** | **Explanation** |
|---|---|
| maxCellineNB | Maximum no. cells that can be served by an eNB. Value is 256. |

Table 3 and Table 4 show a UL interference overload indication IE included in the load information message. This IE provides, per PRB, a report on interference overload. The interaction between the indication of UL interference overload and UL high interference is implementation specific.

**[Table 3]**

| **IE/Group Name** | **Presence** | **Range** | **IE type and reference** | **Semantics description** |
|---|---|---|---|---|
| **UL Interference Overload Indication List** | | *1* .. *<maxno ofPRBs* > | | |
| >UL Interference Overload Indication | M | | ENUMERATED (high interference, medium interference, low interference, ...) | Each PRB is identified by its position in the list: the first element in the list corresponds to PRB 0, the second to PRB 1, etc. |

**[Table 4]**

| **Range bound** | **Explanation** |
|---|---|
| maxnoofPRBs | Maximum no. Physical Resource Blocks. Value is 110. |

Table 5 shows a UL high interference indication IE included in the load information message. This IE provides, per PRB, a 2 level report on interference sensitivity. The interaction between the indication of UL overload and UL high interference is implementation specific.

**[Table 5]**

| **IE/Group Name** | **Presence** | **Range** | **IE type and reference** | **Semantics description** |
|---|---|---|---|---|
| HII | M | | BIT STRING (1..110, ...) | Each position in the bitmap represents a PRB (first bit=PRB 0 and so on), for which value "'1" indicates 'high interference sensitivity' and value "0" indicates 'low interference sensitivity'. The maximum number of Physical Resource Blocks is 110 |

Table 6 shows a relative narrowband TX power (RNTP) IE included in the load information message. This IE provides an indication on DL power restriction per PRB in a cell and other information needed by a neighbor eNB for interference aware scheduling.

**[Table 6]**

| **IE/Group Name** | **Presence** | **Range** | **IE type and reference** | **Semantics description** | **Criticality** | **Assigned Criticality** |
|---|---|---|---|---|---|---|
| RNTP Per PRB | M | | BIT STRING (6..110, ...) | Each position in the bitmap represents a n _{PRB} value (i.e. first bit=PRB 0 and so on), for which the bit value represents *RNTP (n_{PRB})*, defined in TS 36.213 [11]. Value 0 indicates "Tx not exceeding RNTP threshold". Value 1 indicates "no promise on the Tx power is given" | - | - |
| RNTP Threshold | M | | ENUMERATE D (-∞, -11, - 10, -9, -8, -7, - 6, -5, -4, -3, -2, -1, 0, 1, 2, 3, ...) | RNTP_{threshold} is defined in TS 36.213 [11] | - | - |
| Number Of Cell-specific Antenna Ports | M | | ENUMERATE D (1, 2, 4, ...) | *P* (number of antenna ports for cell-specific reference signals) defined in TS 36.211 [10] | - | - |
| P_B | M | | INTEGER (0..3, ...) | P_{B} is defined in TS 36.213 [11] | - | - |
| PDCCH Interference Impact | M | | INTEGER (0..4, ...) | Measured by Predicted Number Of Occupied PDCCH OFDM Symbols (see TS 36.211 [10]). | - | - |
| | | | | Value 0 means "no prediction is available" | | |

According to the prior art, the E-UTRAN performs interference coordination between cells (e.g., between macro cell and pico cell) by dedicating some specific subframes to a neighbor cell (i.e. ABS in time domain ICIC) or by reducing transmission power of some radio resources from a neighbor cell (i.e. RNTP per PRB).

However, the E-UTRAN may fail to achieve successful interference coordination for transmissions of system information and paging. It is because scheduling of system information and paging messages from neighbor cells would be frequently overlapped in time. Thus, if the UE performs handover from a macro cell to a pico cell and then if the UE falls in coverage range extension (CRE) region of the pico cell, the UE may fail to detect the system information from the pico cell after handover completion. While the UE is within the CRE region of the pico cell, it may also fail to detect the paging messages from the pico cell.

To detect system information and/or a paging message when ICIC is configured, first of all, a method for transmitting information on resources may be proposed according to an embodiment of the present invention. According to the embodiment of the present invention, information on frequency and time resources where a first cell restricts scheduling of transmission in frequency and time (on one or more common channels, in particular, frequency selective scheduling of system information or paging messages on DL-SCH) is set. And, the information on resources may be indicated to a second cell in order to help frequency selective scheduling of system information or a paging message at the second cell.

FIG. 12 shows an example of a method for transmitting information on resources according to an embodiment of the present invention.

Referring to FIG. 12, a target eNB may control a pico cell and a source eNB may control a macro cell. A macro UE (MUE) is defined as a UE connected to the macro cell and a pico UE (PUE) is defined as a UE connected to the pico cell. The pico cell may support CRE.

It is assumed that when a normal MUE enters a CRE region of the pico cell, the normal MUE could not detect the pico cell. However, if the E-UTRAN provides CRE assistance information to the UE, it is possible that then UE within the CRE region of the pico cell detects the pico cell. Thus, the macro cell may perform handover from the macro cell to the pico cell, even if the UE is located within the CRE region of the pico cell. It is also assumed that the UE is in RRC_CONNECTED.

At step S100, eNBs may exchange ICIC related information. The ICIC related information may be exchanged via a load information message. If the target eNB controlling the pico cell allows the UE to perform handover to the CRE region of the pico cell, the target eNB may indicate to the source eNB that a cell controlled by the target eNB supports CRE.

If the UE moves from the source eNB to the target eNB, the UE may fail to detect system information or a paging message from a cell controlled by the target eNB, because the system information and the paging message between the source cell and the target cell are scheduled at the same time and frequency. Namely, inter-cell interference between the cells makes the UE to fail to detect the system information or the paging message.

To avoid such inter-cell interference, the source eNB sets apart some radio resources (frequency resources as well as time resources) for the system information and the paging message that are transmitted at a cell controlled by the target eNB. Then, at step S 110, the source eNB indicates information on the radio resources to the target eNB via an X2AP message such as the load information message.

The source eNB may not schedule any transmission of the system information and the paging message in the indicated radio resources. Thus, the target eNB may be able to schedule the system information or the paging message in the indicated radio resources. Such resource coordination enables the UE to detect the system information and the paging message in the CRE region of the pico cell.

Or, the source eNB may indicate to the target eNB radio resources used for scheduling of transmission of the system information and the paging message by a cell controlled by the source eNB. The target eNB may not schedule the system information and the paging message in the indicated radio resources.

According to an embodiment of the present invention described in FIG. 12, resources for the system information and/or the paging message of the source eNB and the target eNB may not overlap. The UE may detect the system information the system information and/or the paging message transmitted by the target eNB when the UE is in the CRE region of a cell controlled by the target eNB.

Meanwhile, there is some system information which is not always to be transmitted, such as system information related to UE capability, etc. When ICIC is configured, resources for scheduling of system information are restricted. Therefore, a method for receiving system information based on UE capability provided by the UE may be proposed.

According to an embodiment of the present invention, a first eNB recognizes that system information related capability (in particular, UE capability related to SIB(s) other than SIB 1 to 7) needs to be transmitted for a cell, and indicates the system information related capability to a network if the UE supports the system information related capability, and receives the system information via a message dedicated to the UE. The system information related capability is one of public warning system (PWS) capability (earthquake and tsunami warning system (EWTS) capability, commercial mobile alert system (CMAS) capability, Korean public alert system (KPAS) capability, EU-ALERT capability), multimedia broadcast multicast service (MBMS) capability, CDMA2000 capability, extended access barring (EAB) capability, and CSG capability.

FIG. 13 shows an example of a method for receiving system information according to an embodiment of the present invention.

At step S200, for handover to the CRE region of the second eNB, the first eNB may request the UE to transmit SIB related UE capability. The SIB related UE capability may include at least one of PWS capability, MBMS capability, and EAB capability. The request can be transmitted via system information, an RRC connection reconfiguration message, or a UE capability enquiry message.

At step S210, if the SIB related UE capability is requested, the UE informs the first eNB whether or not the UE supports the SIB related UE capability via a UE capability information message. For example, if the UE supports one of ETWS, CMAS, KPAS and EU-ALERT, the UE informs the first eNB that the UE supports one of ETWS, CMAS, KPAS and EU-ALERT. If the UE supports MBMS, the UE informs the first eNB that the UE supports MBMS. If the UE supports EAB, the UE informs the first eNB that the UE supports EAB.

At step S220, the may perform measurements on a cell controlled by the second eNB and then may transmit measurement results including reference signal received quality (RSRQ)/ reference signal received power (RSRP) of the cell controlled by the second eNB, to the first eNB. The UE may use CRE assistance information provided by the first eNB.

At step S230, for handover, the first eNB transmits a handover request message to the second eNB for the UE. The UE may not detect the system information or the paging message in the CRE region of the cell controlled by the second eNB after handover. Thus, by using the handover request message, the first eNB may request the second eNB to provide the system information of the second eNB. The first eNB may also inform the second eNB about the SIB related UE capability by using the handover request message, in order to help the second eNB know which type of SIB needs to be provided to the first eNB.

At step S240, the second eNB transmits a handover request acknowledgement message to the first eNB for the UE. Based on the handover request message, the handover request acknowledgement message may include SIB scheduling information that is included in an SIB 1 of the second eNB. The handover request acknowledgement message may also include one or more SIBs that were requested in the handover request message.

At step S250, the first eNB transmits an RRC connection reconfiguration message with mobility control information as a handover command. The RRC connection reconfiguration message may include the SIB scheduling information and the requested SIBs that are included in the handover request acknowledgement message.

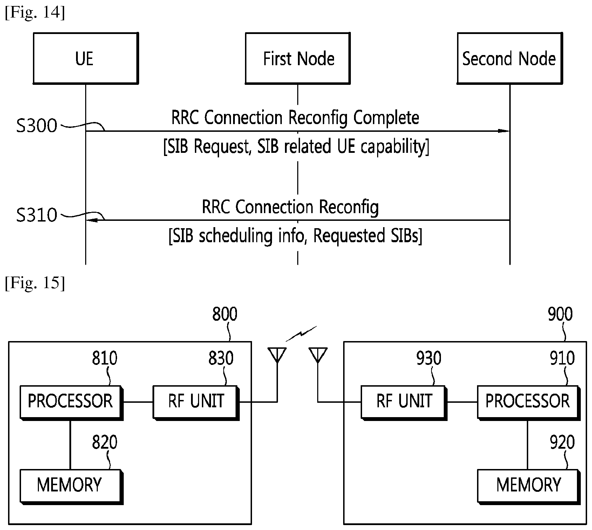

FIG. 14 shows another example of a method for receiving system information according to an embodiment of the present invention.

At step S300, for handover, the UE makes a connection to the second eNB and then transmits an RRC connection reconfiguration message to the second eNB. If the UE does not receive SIB scheduling information or the requested SIBs, UE may indicate an SIB request and SIB related UE capability to the second eNB via the RRC connection reconfiguration complete message.

At step S310, if the UE connected to the second eNB indicates the SIB request to the second eNB, the second eNB informs the UE about SIB scheduling information or contents of SIBs of the second eNB via an RRC message on a dedicated control channel (DCCH), such as RRC connection reconfiguration message. If the UE indicate the SIB related UE capability, the second eNB informs the UE about contents of SIBs that are linked to the SIB related UE capability.

According to an embodiment of the present invention described in FIG. 13 and 14, system information related to UE capability may be received based on UE capability provided by the UE. Therefore, all system information related to UE capability does not have to be transmitted,

FIG. 15 is a block diagram showing wireless communication system to implement an embodiment of the present invention.

An eNB 800 may include a processor 810, a memory 820 and a radio frequency (RF) unit 830. The processor 810 may be configured to implement proposed functions, procedures and/or methods described in this description. Layers of the radio interface protocol may be implemented in the processor 810. The memory 820 is operatively coupled with the processor 810 and stores a variety of information to operate the processor 810. The RF unit 830 is operatively coupled with the processor 810, and transmits and/or receives a radio signal.

A UE 900 may include a processor 910, a memory 920 and an RF unit 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The RF unit 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The RF units 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein.

## Claims

1. A method for receiving, by a user equipment, UE (10, 900), system information in a wireless communication system, the method comprising:
receiving, by the UE, a request for transmission of information indicating a support of a reception of the system information,
wherein the request for transmission of the information indicating the support of the reception of the system information is received via a radio resource control, RRC, connection reconfiguration message;
transmitting, by the UE, the information indicating support of the reception of the system information to a source eNB (800),
wherein the information indicating the support of the reception of the system information indicates which type of the system information the UE supports,
wherein the UE supported type of the system information is related to one or more system information block, SIB, numbers other than SIB 1 to SIB 7,
wherein the information indicating the support of the reception of the system information further includes indicating support of a public warning system, PWS, capability or an extended access barring, EAB, capability; and
receiving, by the UE, the system information based on the information indicating the support of the reception of the system information.

2. The method of claim 1, wherein the information indicating the support of the reception of the system information corresponds to indicating support of a system information block, SIB, request.

3. The method of claim 1, wherein the information indicating the support of the reception of the system information is transmitted via a UE capability information message.

4. The method of claim 1, further comprising receiving scheduling information of the system information.

5. A user equipment, UE (10, 900), in a wireless communication, the UE comprising:
a radio frequency, RF, unit (930) for transmitting or receiving a radio signal; and
a processor (910) coupled to the RF unit, and configured for:
receiving a request for transmission of information indicating a support of a reception of the system information,
wherein the request for transmission of the information indicating the support of the reception of the system information is received via a radio resource control, RRC, connection reconfiguration message;
transmitting the information indicating support of the reception of the system information to a source eNB (800),
wherein the information indicating the support of the reception of the system information indicates which type of the system information the UE supports,
wherein the UE supported type of the system information is related to one or more system information block, SIB, numbers other than SIB 1 to SIB 7,
wherein the information indicating the support of the reception of the system information further includes indicating support of a public warning system, PWS, capability or an extended access barring, EAB, capability; and
receiving the system information based on the information indicating the support of the reception of the system information.

6. The UE of claim 5, wherein the information indicating the support of the reception of the system information corresponds to indicating support of a system information block, SIB, request.

7. The UE of claim 5, wherein the information indicating the support of the reception of the system information is transmitted via a UE capability information message.

8. The UE of claim 5, wherein the processor further configured for: receiving scheduling information of the system information.

## Patentansprüche

1. Verfahren zum Empfangen von Systeminformation durch ein Benutzerendgerät, UE (10, 900), in einem drahtlosen Kommunikationssystem, wobei das Verfahren umfasst:
Empfangen, durch das UE, einer Anfrage zur Übertragung von Information, die eine Unterstützung eines Empfangs der Systeminformation angibt,
wobei die Anfrage zur Übertragung der Information, die die Unterstützung des Empfangs der Systeminformation angibt, über eine Radio Resource Control, RRC,-Verbindungsrekonfigurationsnachricht empfangen wird;
Übertragen der Information durch das UE, die die Unterstützung des Empfangs der Systeminformation angibt, an einen Quell-eNB (800),
wobei die Information, die die Unterstützung des Empfangs der Systeminformation angibt, angibt, welchen Typ der Systeminformation das UE unterstützt,
wobei der von dem UE unterstützte Typ der Systeminformation mit einer oder mehreren Systeminformationsblock, SIB,-Zahlen verschieden von SIB 1 bis SIB 7 in Zusammenhang steht,
wobei die Information, die die Unterstützung des Empfangs der Systeminformation angibt, ferner aufweist das Angeben der Unterstützung einer öffentlichen Warnungssystems, PWS,-Fähigkeit oder einer erweiterten Access Barring, EAB,-Fähigkeit; und
Empfangen der Systeminformation durch das UE basierend auf der Information, die die Unterstützung des Empfangs der Systeminformation angibt.

2. Verfahren nach Anspruch 1, wobei die Information, die die Unterstützung des Empfangs der Systeminformation angibt, dem Angeben der Unterstützung einer Systeminformationsblock, SIB,-Anfrage entspricht.

3. Verfahren nach Anspruch 1, wobei die Information, die die Unterstützung des Empfangs der Systeminformation angibt, übertragen wird über eine UE-Fähigkeits-Informationsnachricht.

4. Verfahren nach Anspruch 1, ferner umfassend Empfangen von Planungsinformation der Systeminformation.

5. Benutzerendgerät, UE (10, 900), in einer drahtlosen Kommunikation, wobei das UE umfasst:
eine Hochfrequenz, RF,-Einheit (930) zum Übertragen oder Empfangen eines Funksignals; und
einen Prozessor (910), der mit der RF-Einheit verbunden ist, und ausgebildet ist zum:
Empfangen einer Anfrage zur Übertragung von Information, die eine Unterstützung eines Empfangs der Systeminformation angibt,
wobei die Anfrage zur Übertragung der Information, die die Unterstützung des Empfangs der Systeminformation angibt, über eine Radio Resource Control, RRC,-Verbindungsrekonfigurationsnachricht empfangen wird;
Übertragen der Information, die die Unterstützung des Empfangs der Systeminformation angibt, an einen Quell-eNB (800),
wobei die Information, die die Unterstützung des Empfangs der Systeminformation angibt, angibt, welchen Typ der Systeminformation das UE unterstützt,
wobei der von dem UE unterstützte Typ der Systeminformation in Zusammenhang steht mit einer oder mehreren Systeminformationsblock, SIB,-Zahlen verschieden von SIB 1 bis SIB 7,
wobei die Information, die die Unterstützung des Empfangs der Systeminformation angibt, ferner aufweist das Angeben einer Unterstützung einer öffentlichen Warnungssystem, PWS,-Fähigkeit oder einer erweiterten Access Barring, EAB,-Fähigkeit; und
Empfangen der Systeminformation basierend auf der Information, die die Unterstützung des Empfangs der Systeminformation angibt.

6. UE nach Anspruch 5, wobei die Information, die die Unterstützung des Empfangs der Systeminformation angibt, dem Angeben der Unterstützung eine Systeminformationsblock, SIB,-Anfrage entspricht.

7. UE nach Anspruch 5, wobei die Information, die die Unterstützung des Empfangs der Systeminformation angibt über eine UE-Fähigkeits-Informationsnachricht übertragen wird.

8. UE nach Anspruch 5, wobei der Prozessor ferner ausgebildet ist zum: Empfangen von Planungsinformation der Systeminformation.

## Revendications

1. Procédé pour recevoir, par un équipement utilisateur, UE (10, 900), des informations système dans un système de communication sans fil, le procédé comprenant :
la réception, par l'UE, d'une demande de transmission d'informations indiquant un support d'une réception des informations système,
dans lequel la demande de transmission des informations indiquant le support de la réception des informations système est reçue par l'intermédiaire d'un message de reconfiguration de connexion de contrôle de ressources radio, RRC ;
la transmission, par l'UE, des informations indiquant le support de la réception des informations système à un eNB source (800),
dans lequel les informations indiquant le support de la réception des informations système indiquent quel type des informations système l'UE supporte,
dans lequel le type supporté par l'UE des informations système se rapporte à un ou plusieurs numéro(s) de blocs d'informations système, SIB, autre(s) que SIB 1 à SIB 7,
dans lequel les informations indiquant le support de la réception des informations système incluent en outre l'indication du support d'une capacité de système public d'avertissement, PWS, ou d'une capacité d'interdiction d'accès étendu, EAB ; et
la réception, par l'UE, des informations système sur la base des informations indiquant le support de la réception des informations système.

2. Procédé selon la revendication 1, dans lequel les informations indiquant le support de la réception des informations système correspondent à l'indication du support d'une demande de bloc d'informations système, SIB.

3. Procédé selon la revendication 1, dans lequel les informations indiquant le support de la réception des informations système sont transmises par l'intermédiaire d'un message d'information de capacité d'UE.

4. Procédé selon la revendication 1, comprenant en outre la réception d'informations d'ordonnancement des informations système.

5. Équipement utilisateur, UE (10, 900), dans une communication sans fil, l'UE comprenant :
une unité (930) en fréquences radio, RF, pour transmettre ou recevoir un signal radio ; et
un processeur (910) couplé à l'unité RF, et configuré pour :
recevoir une demande de transmission d'informations indiquant un support d'une réception des informations système,
dans lequel la demande de transmission des informations indiquant le support de la réception des informations système est reçue par l'intermédiaire d'un message de reconfiguration de connexion de contrôle de ressources radio, RRC ;
transmettre les informations indiquant le support de la réception des informations système à un eNB source (800),
dans lequel les informations indiquant le support de la réception des informations système indiquent quel type des informations système l'UE supporte,
dans lequel le type supporté par l'UE des informations système se rapporte à un ou plusieurs numéro(s) de blocs d'informations système, SIB, autre(s) que SIB 1 à SIB 7,
dans lequel les informations indiquant le support de la réception des informations système incluent en outre l'indication du support d'une capacité de système public d'avertissement, PWS, ou d'une capacité d'interdiction d'accès étendu, EAB ; et
recevoir les informations système sur la base des informations indiquant le support de la réception des informations système.

6. UE selon la revendication 5, dans lequel les informations indiquant le support de la réception des informations système correspondent à l'indication du support d'une demande de bloc d'informations système, SIB.

7. UE selon la revendication 5, dans lequel les informations indiquant le support de la réception des informations système sont transmises par l'intermédiaire d'un message d'information de capacité d'UE.

8. UE selon la revendication 5, dans lequel le processeur configuré en outre pour : recevoir des informations d'ordonnancement des informations système.
